Europäisches Patentamt

European Patent Office

Office européen des brevets

(11) Publication number: **0 203 673**
**A2**

## EUROPEAN PATENT APPLICATION

(21) Application number: 86200970.1

(22) Date of filing: 02.06.86

(51) Int. Cl.4: **G01N 25/72** , G01K 17/00

(30) Priority: 31.05.85 US 739598

(43) Date of publication of application:
03.12.86 Bulletin 86/49

(84) Designated Contracting States:
DE FR GB SE

(71) Applicant: THE DOW CHEMICAL COMPANY
2030 Dow Center Abbott Road P.O. Box 1967
Midland, MI 48640(US)

(72) Inventor: Mack, Russel T.
304 Balsam
Lake Jackson Texas 77566(US)

(74) Representative: Smulders, Theodorus A.H.J.
et al
Vereenigde Octrooibureaux Nieuwe Parklaan
107
NL-2587 BP 's-Gravenhage(NL)

(54) Method for heat loss survey.

(57) A method for heat loss surveys comprising the steps of obtaining one or more thermal profiles of a surface radiating heat, the thermal profiles being marked in depicting areas of specified temperatures; at a selected location on each surface a heat flux measurement is made to thereby identify the heat loss from the surface at the selected location. The selected heat loss measurement is then correlated with the thermal profiles by employing a scaling equation to thus obtain indication of heat loss from all increments of the thermal profile, and thence from the entire surface under investigation. Heat loss evaluations for each of the various surfaces of the object being measured are then totalized. The total heat loss and the consequent cost thereof is considered to determine if heat insulation of the object will enhance or impede return on investment.

## METHOD FOR HEAT LOSS SURVEY

In many different kinds of structures, heat loss or gain can be a serious problem from the standpoint of utility cost. For example, in commercial buildings and dwellings, air conditioning and heating are major cost factors. Also in manufacturing processes in the petroleum, chemical and petrochemical industries, heat transfer can have considerable importance. For purposes of simplicity, however, heat transfer and the need for surveying it is discussed herein particularly in application to industrial processes. Such is not intended to limit the spirit and scope of this invention.

The utility cost of a petrochemical plant can be substantial. A part of the utility cost is occasioned by the necessity of maintaining the process at specified temperatures. As the cost of utilities increase, it becomes expedient to consider applying insulation to reduce heat loss. Insulation of manufacturing process equipment and other structures for heat loss reduction must provide a reasonable return on investment (ROI) to render the provision of insulation commercially feasible. It is generally too costly to simply insulate every exposed surface. Conversely, it is wasteful simply to let a substantial heat flux from the operating petrochemical plant markedly increase the cost of utilities and thus increase the ultimate cost of goods to the consumer.

In the past, heat loss surveys have been conducted mathematically, based on multiple temperature point samples from the object in question and taking into account the ambient temperature at the time of sampling, weather bureau reports of wind direction and velocity, and perhaps other factors as well. These heat loss surveys have been time consuming, expensive, and are subject to many possibilities for error.

Two modes primarily determine the rate of heat loss. That is, heat loss is occasioned by radiation of heat and/or by convection of heat. The radiation loss is particularly important when temperatures approach approximately 400°F or higher. The loss is substantial at that level, and at higher temperatures.

An additional factor is the loss of heat by convection. This refers to the loss of heat as a result of heating the surrounding air. So to speak, an outdoor situated petrochemical plant is an air cooled structure.

Of the several similar theory-based methods of heat loss measurement which are common in industry at the present time, a heat loss measurement equation relating to turbulent flow on vertical surfaces appears to be the most satisfactory. This technique, however, is nevertheless ripe with opportunities for error. For example, a point much hotter or much colder than the surface average can very easily be chosen for the surface point temperature. Also, reported wind velocities seldom accurately represent the local micro-environment of surface convection. Also, adopting a particular radiative "sink" temperature is a gross generalization, even if high-temperature equipment in the vicinity is neglected (common in industrial plants). On a clear night, due to the high absorbtivity and cold temperatures of space, the radiative "sink" would probably be much lower than the local air temperature. On a sunny day, obviously, the "sink" temperature would be somewhat higher. A more accurate technique would either avoid the need for assuming a radiative "sink" temperature of would more accurately calculate the sink temperature existing at the time of data collection.

The present invention concerns the principle of obtaining heat loss values for a (relatively) larger area based on an incremental heat loss sample - (metered by any suitable means or calculated using traditional convective and/or radiative equations) and an overall temperature profile of the surface under consideration. From the sampled increment, heat losses at other portions of the surface are scaled according to the temperature profile. Increments are summed to provide total heat loss, from which a determination can be made whether other cost of insulating the surface -compared with heat loss savings -will provide an acceptable net return of investment.

Through suitable infrared photographic techniques, a thermal image of a structure can be obtained. This approach, however, will provide temperature profile lines. Even so, the heat loss is not a simple function of the surface temperature profile alone. Thus, if temperature profile lines are set at a spacing of 20°F across a surface, merely obtaining such a profile by infrared photographic techniques will not in and of itself provide data to accurately determine the overall heat loss. With the profile and "scant", additional (easily-collected) data, typical heat loss equations could be solved for all elements, and the results summed. In fact, this is done in situations where a fluxmeter cannot be used. Though this is a great improvement over former methods (considering the fact that minute thermal details across the whole surface are rapidly considered) without the use of a fluxmeter, the procedure still has the possibility of significant errors due to the difficulty of obtaining an accurate ambient temperature for any point on the surface.

For this reason, a measured heat loss sample is obtained from one element of a surface study area whenever possible, and the boundaries of the area are chosen so that every element within the area can reasonably be assumed to have the same emissivity, and be exposed to the same·wind velocity and radiant ambient temperature.

Because there are so many variables involved, the present method simplifies and enables the taking of simple temperature measurements whereby an entire surface area (such as the surface of a petrochemical refining or processing unit) can be evaluated. This method enables heat loss of a structure to be determined typically on a per unit area basis which can be extended to the whole area or to selected portions thereof. The measurement typically provided is total BTU loss per surface area and can be obtained for any desired temperature on the surface area. Thus, data and measurements can be obtained for any area, and areas which are too cool to merit further investigation can be discarded.

While the foregoing speaks very generally of the procedure set forth in detail hereinbelow, a better understanding will be obtained upon a review of the following specification with reference to the drawings which are described below.

So that the manner in which the above recited features, advantages and objects of the present invention are attained and can be understood in detail, more particular description of the invention, briefly summarized above, may be had by reference to the embodiments thereof which are illustrated in the appended drawings.

It is to be noted, however, that the appended drawings illustrate only typical embodiments of this invention and are therefore not to be considered limiting of its scope, for the invention may admit to other equally effective embodiments.

Fig. 1 is a pictorial representation depicting several objects from which heat loss measurements can be obtained, the figure showing the heat influence of the object relative to surrounding structures, including the heat influence of the ground and sky, these being among the number of factors which can impact heat loss of the object;

Fig. 2 is a pictorial representation in isometric form, showing a structure to be subjected to heat loss survey;

Fig. 3 represents an elevational view of one surface of the structure shown in Fig. 2 and illustrates computer gridding thereof; and

Fig. 4 is a physical representation in isometric form showing heat loss information from a structure for use in mathematical computation of total heat loss from the structure.

Three different application categories for this technology are being researched. These are outlined (Roman numerals) below.

I. Quick Heat Loss Field Surveys

Retrofit surveys can be conducted on a routine basis by a mobile crew without interrupting production. The mobile heat loss survey crew may employ a suitable thermal imager for obtaining an overall thermal image of the heat envelope of an apparatus to aid in measuring heat loss from selected views of the envelope. Such thermal imaging is not intended to limit this invention. Other accurate methods of producing temperature profiles exist, and some may prove useful in particular circumstances. Generally, however, the convenience of thermal imaging is preferred. The accurate heat loss data obtained by this economical method can best be employed for return on investment decisions with respect to adding insulation or heat recovery equipment to existing systems.

Procedure

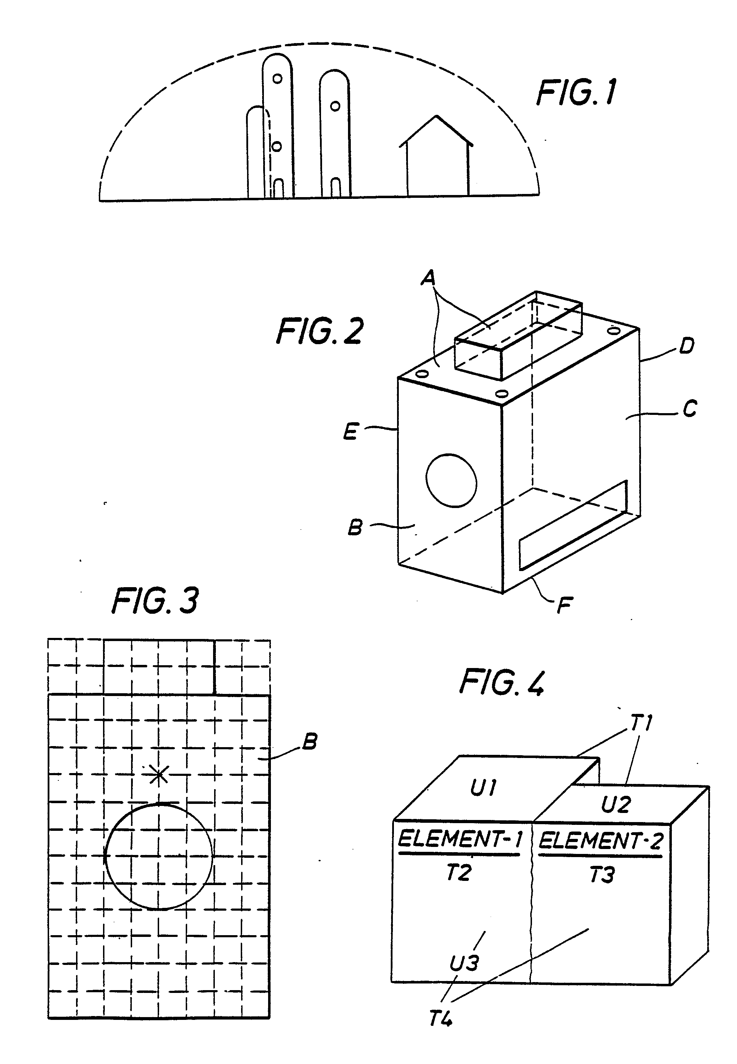

A. Attention is directed to Fig. 1 of the drawings where a representative setting is shown such as for a petrochemical operating unit and associated buildings and other structures in which heat loss measurements are to be obtained. Any of the structures in the figure may be measured according to the principles of this invention to determine the influence of heat insulation on return of investment.

The present heat loss measurement procedure implements solutions to the various problems set forth above. For an understanding of the basic heat loss data collection procedure advanced herewith, the following heat loss measurement procedure emphasizes heat loss data collection.

The procedure includes five basic steps which are: (1) preliminary investigation; (2) initial site survey; (3) task layout; (4) data collection; (5) data reduction and final analysis.

(1) During the preliminary investigation, one defines the heat loss "envelope" to be observed or measured, and obtains blueprints or makes sketches identifying the surface area involving the heat loss envelope. Fig. 2 is representative of a structure being subjected to heat loss measurement with surfaces A, B, C, D and E each being considered individually for determination of total heat loss. Any envelope which gains or loses energy by heat transfer -a home, an office building, a utility steam system, a furnace etc. -could be the subject of such a study. In Fig. 2, the subject is a high temperature process reactor.

(2) An initial site survey is conducted to determine areas of similar (not necessarily identical) forward heat loss potential; i.e., areas which are exposed to approximately the same conditions of convection and radiation. For the reactor shown, a separate study is made of each quadrant side - (surfaces B through E), plus the top (surface A) and bottom (surface F). The surface emissivity is homogeneous in each of these planes; if it were not homogeneous, the planes would require further subdividing until each surface of study contained only one emissivity. Quantifying the emissivity (a different task) is not required -one must only define areas where the emissivity appears constant.

(3) In each of the surfaces chosen for direct thermal inspection, a convenient data collection site is marked.

(4) Data collection is conducted by a heat loss audit crew simultaneously with the thermal imaging (or other temperature profiling), collecting data from the data collection sites of each envelope surface, which data includes:

(a) Surface temperature and heat loss - (BTU/ft² at each data collection site).

(b) Ambient temperature a few feet from the surface. To improve accuracy, these flux and temperature readings should be averages of sample values taken at increments of a period of time. Accuracy increases if computer integrated values of data samples are used.

(c) High resolution thermal images of each surface of the envelope are made. To reduce temperature error due to emissivity, a contact pyrometer is placed on a representative part of the surface. The emissivity control on the thermal imager is then adjusted until the image temperature matches the temperature of the contact pyrometer. Areas of uncharacteristic emissivity are spot checked with the surface pyrometer, and corrections noted. (For imagers without emissivity controls, notes would be taken and the adjustments made during data reduction.)

.(d) Weather bureau data -including wind speed and temperature at the time of data collection -is also noted, or in the alternative, wind speed and temperature may be simultaneously measured at the data collection site.

(5) Data reduction and final thermal loss analysis are developed in detail as described below.

According to the present invention, a number of innovative principles are provided for effective heat loss data collection and measurement. These principles will be identified as the procedure is explained in a representative sequential manner.

Quick heat loss field surveys are recommended for rapid and convenient analysis of most exposed (to convection/radiation) heat loss systems such as industrial or commercial systems. The technique is useful for accurately quantifying losses from physical models of thermal systems - (or parts of systems). While this procedure is described for a model illustrated as a block, practically all types of structures having a variety of shapes can be analyzed.

B. Salient Features

(1) A primary principle according to the present invention is the principle of obtaining heat loss values for a relatively large area based on an incremental heat loss sample-metered by any means or calculated utilizing traditional convection and/or radiation equations -and an overall temperature profile (collected by any means). From the sample increment, heat loss from other increments is scaled.

Data reduction and reporting may be conducted by means of a computer. Alternatively, data may be recorded for processing through a computer at another location. Data reduction and reporting is as follows:

(a) Assuming a fluxmeter is employed for direct heat loss measurement, heat loss from fluxmeter readings at the individual data collection site are obtained in BTU/ft² per hour.

Note: If the thermal image is computerized and the computer "pixels" are used as the individual elements in the matrix, method steps (b) and (c) above may be deleted, and usually step (d) above will be nearly an automatic function of the computer/software system.

(b) A "rough" heat loss is estimated for a defined larger surface. This is accomplished by multiplying the heat loss from the reference sample site on the surface by the area of the surface.

(c) A large number of elements is used in the finite element analysis to increase the accuracy. However, most computers have a limited amount of data storage space, necessitating a compromise: It is felt that sufficient accuracy can be obtained (for most purposes) by selecting element size such that each element of the envelope represents approximately 0.1% of the total heat loss from the system. The computer automatically divides each surface into elements of correct size. Alternately, this step can be accomplished with a hand calculator and the gridded envelope drawing in the fashion of Fig. 2.

(d) Corrected temperatures are assigned to the bands on the thermal images. The thermal images are then superimposed on the envelope matrix, and the surface temperatures are assigned to each surface element. Ideally, this operation takes place as a result of thermal image signals fed directly to the computer to superimpose over the finite element grid.

(e) An important feature of this technique is the association of elements of similar forward heat loss potential. If the external heat transfer factors are similar, then surface temperature differences indicate dissimilarities in internal heat transfer coefficients.

(f) Total heat loss (BTU) is calculated for each envelope surface by summing BTU losses of the individual elements.

(g) Overall heat loss from the entire envelope is calculated by summing the losses from the individual surfaces.

The incremental heat losses may be studied individually by or in subgroups. It is most convenient to deal with these increments as elements of definite and specified physical size. From this data, accurate energy cost loss and ROI can easily be calculated using well known formulae.

(2) Reference Sample

Another important aspect of the present invention concerns utilization of a contact, thermophile-type thermal fluxmeter or other direct heat loss measuring device to obtain an accurate "reference" heat loss sample for each area for use in the heat loss equations developed under the principle of quick heat loss surveys according to the process of paragraph I above.

(a) A set of heat loss surveys is collected (by the technique described above).

Where a reference site cannot be accessed with a contact pyrometer and a heat-flux measurement device, the thermal profile is generated from optical data and heat flow from each matrix element is solved, but metered reference samples provide much more reliable results.

Heat fluxmeter devices are available, and one such device is set forth in application Serial No. 06/705,754 by the common inventor herewith entitled PORTABLE HEAT FLUXMETER FIXTURES, filed February 25, 1985. This device is applied to the surface to measure heat flux. Heat flux is typically given in units of BTU per surface area per hour. This measure is thus obtained at selected locations. Only one of these reference measurements is required for each unique surface emissivity within each image collected. For instance, if the entire object is painted with a medium gray alkyd paint (emissivity, about 0.92), and if representative images are collected on the north, south, east and west sides, then only 4 heat flux samples are required: one sample from each side. If a single image contains an area with somewhat oxidized aluminum insulation sheeting (emissivity, perhaps 0.40) as well as the gray paint, however - then a second flux sample is recommended. This is because it is so inconvenient to exactly quantify emissivities in the field. After field images are reduced to areas of homogeneous emissivities and exposure to (external) convection and/or radiant sources and sinks, heat loss at every unsampled site within individual areas can be scaled from the sampled flux site within the same area using an appropriate equation. Within the same edited area, any sites at the same temperatures as the sample site (references) will have the same heat loss as the sampled site, as well.

### (3) Detailed Temperature Profile

Also, the invention concerns utilization of a quantifying infrared thermal imager or a pyroelectric vidicon to obtain a detailed temperature profile for use in the heat loss equations. A profile heat flux is obtained either by use of traditional convection and radiation formulae, or by the principle of obtaining heat flux values for a larger area based on an incremental heat flux reference sample and an overall temperature profile as mentioned above. Algorithms are then employed which accurately consider the temperature value of each pixel defined on the thermal imager. Treating the pixels as finite elements for use in finite difference, finite element, other matrix forms, or algebraic equations for detailed analysis of all heat flow phenomenon within the system, and in particular for the study of surface heat loss by the method described by the incremental heat loss sample/temperature profile procedure. Editing algorithms to delete pixels outside the area of interest can be employed as well.

Present needs are served by an algorithm which allows specifying some rectangular portion of the overall image for heat loss study, deleting all pixels below and above selected minimum/maximum temperatures of interest and then automatically identifying the unique temperatures within the remaining field, and counting the number of pixels at each unique temperature. Measured reference heat flux and temperature being two input variables, heat flux for the remaining unique temperature zone is then calculated. Areas can be quantified by several means, (including trigonometrically from input lens angle and distance to the photographic target).

Previously, a polar plainimeter has been utilized on photographs of temperature profile images (or corresponding slide projections or computer printouts), examining the individual temperature profile bands to obtain areas of each thermal - (color) zone. This process is tedious and very time consuming. According to the present invention the overall area of the study is input and an algorithm calculates the areas of the unique temperatures as a portion of the total area and determines the ratio of the number of pixels in each individual zone to the number of pixels in the overall image. Having the individual areas and the fluxes per unit area, the program computes hourly heat loss from each zone in BTU/hr for the zone. Energy costs are known, and therefore the energy loss per hour is easily calculated. For energy loss and dollar loss per year, several alternatives are available.

In this case, Q -heat loss rate;

$t_i$ = internal temperature;

$t_s$ = outside surface temperature;

R = thermal resistance of the wall;

ta = local yearly average temperature; and

V = local average wind speed.

First, R is solved (for each pixel) for conditions at the time of the survey. Then the computer solves interactively for $t_s$ at yearly average conditions, until an accurate $t_s$ is achieved.

An equation then provides the hourly heat loss based on local yearly average climate conditions. Yearly heat loss is then simply calculated by multiplying the yearly operating hours. Notice that many of the problems associated with traditional heat loss calculations seem to have been successfully addressed, but some error can be expected to remain due to inaccuracy in annualized assumption for the yearly loss projections. In part, this is due to both the radiative sink temperature assumption and to the fact that the equations for convective and radiative losses are not linear, so that loss calculations based on averaged climate conditions can always be expected to be less accurate than loss calculations done at many increments of time and climate conditions. For buildings and other systems near ambient temperature, a more sophisticated algorithm is required to obtain any useful yearly data.

### (4) Combined Technology of 1, 2 and 3

The features of this invention include combining the subject matter of paragraphs 1, 2 and 3 (above) into an overall heat loss survey technology.

The features hereof also include overall heat loss combining the subject matter of paragraphs 2 and 3 (above) in any fashion to obtain overall heat loss (or heat loss of any increment larger than that sampled by the fluxmeter).

Normally, the procedure outlined above is employed as a Quick Heat Loss Field Survey -that is, a one-time, rapid analysis of the heat-loss surfaces. For more demanding problems, an extension of this technology has been developed.

II. Full-range Heat Loss Field Survey

This concept addresses those problems still evident in the technique of Quick Heat Loss Field Surveys. Full-range heat loss surveys can be complex procedures demanding the collection of large amounts of data on several different dates. Total heat survey costs may be high, even for relatively simple systems. For these reasons, this technique is especially useful for those systems which have both a demand for extraordinarily high accuracy of return on investment calculation and an expectation of high-dollar returns. In cases where variable convection (wind dependent) is factors, this method is expected to prove useful as well. For all other cases, the Quick Heat Loss Survey technique proves much more practical and economical.

Procedure

A. A set of heat Loss Surveys is collected (by the techniques described above).

(1) A period of time is chosen when the lowest obtainable stable external temperature (and the highest wind, if this is a factor) exists. Due to the "flywheel effect" common in most industrial thermal systems, climate conditions should be fairly constant for at least three hours before data collection begins, and a complete set of data should be collected before conditions change. To enable accurate data collection:

(a) The plant operators should set the internal temperatures (process temperature, room temperature, etc.) to the lowest temperature within the normal operating range, and time should be allowed for the system to stabilize. Then a complete set of heat loss data should be collected along with wind speed and ambient temperature.

(b) The plant operators should next set and stabilize a temperature at or near the normal internal operating temperature of the plant, and another complete set of heat loss data should be collected.

(c) Finally, the plant operators should set and stabilize a temperature at or near the highest internal temperature within the operating range. A third complete set of heat loss data should be collected at this condition.

(2) A second time is then chosen such that external temperatures are stable and near the middle of the normal external temperature range. Three sets of data are collected, as above. This data set should be collected during overcast or partly-cloudy conditions, in the daytime.

(3) A third time is chosen at a time that external temperatures are stable and toward the high end of the normal external temperature range. Three more complete sets of heat loss data are collected, as above. This data set should be collected during sunny conditions.

Data collections at other operating conditions could help to assure greater accuracy. In particular, if the system has a significant wind variation, more data will enhance return on investment accuracy.

B. The next step is to produce an image or other graphic representation of the system overlaid with (or otherwise defined by) a finite element matrix with elements of two or more sizes. The element size is adjusted to limit the range of temperatures within any individual element. This is done in order to maintain accuracy of the calculations while reducing computer memory and process time requirements. Usually, the individual elements can be made considerably larger than matrix elements described by the pixel field of the original thermal image data. A computer routine automatically generates a matrix which will produce accurate results, based on the principle of iteratively reducing the size of the elements until each element contains only a specified narrow range of temperatures for either set of the collected data. Obviously, this condition will occur for some elements at a much larger physical size than it will occur for others. To save computer storage space and processing time, a matrix is generated which contains elements of more than one size. Several techniques exist for finite element calculation on matrices with elements of more than one size.

III> FULL TIME HEAT LOSS MONITORING

This method provides an ongoing study of heat loss from a system. A tremendous amount of accurate heat loss data covering a great variety of ambient and operating conditions can be collected conveniently and easily. Two main applications are typical:

A. Applications

(1) On prototype equipment, pilot plants, or on any equipment chosen as a basis for study for future improvements, this method will prove to be invaluable in providing management and design teams with accurate and comprehensive heat loss data. For the tradeoff of having to provide a moderate number of permanently installed thermocouples and computer space for monitoring and analysis, equipment owners can be absolutely sure of a thorough understanding of equipment heat loss characteristics under all conditions. This approach is highly recommmended in preliminary studies for planned energy intensive plants.

(2) Where heat loss is being considered as an operating parameter, this technique can provide industry with data previously unobtainable. Many chemical, petrochemical, and metallurgical production processes, such as for production of electrolytic magnesium, chlorine, titanium and those depending on partial combustion (like coal gasification) share energy balance as a critical operating parameter. Control has often been a problem in these processes, at least partly because of the inability to accurately and continuously monitor radiative and convective heat losses from the system envelope. This new technology facilitates better quality control and better production cost control in energy-balance critical processes.

B. Full Time Monitoring Procedure

(1) First, a set of thermal images is taken of the system envelope to include all convective and radiative surfaces. Temperatures need not be quantified, but qualitatively accurate profiles are required.

(2) Based on the thermal images and system geometry, permanent monitoring sites are selected. Every area which has a unique forward heat transfer potential -that is, a unique emissivity or radiative or convective exposure -and every exposed side, every protrusion of significant size -is instrumented. Besides the geometric requirements, the thermal profile is considered in that where the temperature profile bands are consistently wide for all data sets, few transducers are required for good accuracy. Where the bands are close together, a higher concentration of transducers is called for. Usually, thermocouples are installed at the selected sites.

(3) Multiple sets of heat loss data are collected at various operating conditions, as in II (A) above. Reference temperatures are taken from the permanently mounted thermocouples and/or fluxmeters.

(4) Heat loss data is determined as in II (B) through II (C) above.

(5) Statistical routines (linear regression, etc.) applied to the collected temperature data are employed to produce the temperature at each unmetered matrix element based on the temperatures of nearby metered elements.

(6) Using calculated elemental flux for each data set, numerical U values are calculated for each element in the data set.

(7) Based on values of temperature and elemental heat loss, an array for the finite element solution of the overall system heat loss is solved. After this point, heat loss for any instant of time can quickly and automatically be computed, based on instantaneous readings from the permanent thermocouples.

(8) Provision can be made for the study of individual surfaces or components of the envelope by adding appropriate subroutines to the computer program.

To generally describe the apparatus useful for practice of the present invention should not be viewed as limiting on the practice of the method steps as claimed below. For instance, one step is that of forming a thermal image of a structural surface. This can be executed routinely by using a camera which is a constructed and equipped to prepare a film providing an infrared image where the zones of the structural surface shown different colors or color intensities to hi-light differences in temperature. This normally uses a film which is sensitive to radiant energy. The exposed image is thus subdivided into a number of energy zones which graphically illustrate surface temperature variations. The zones typically depict temperature ranges such as a range of $1°C$ or perhaps zones as broad as $25°C$. This is a scale factor which can be varied depending on the needs. A thermal energy measuring device is also described. Such a flux meter was referenced earlier in the present disclosure and is the subject matter of a specified pending patent application. It is also possible to measure the surface area on the thermal images. A well known apparatus for accomplishing this a panimeter. For instance, the thermal image can be measured to define the surface area of a specified color coded region in the image. That will specify the total area of that particular temperature range. In some instances, it may be necessary to convert a thermal image into specific regions by trigonometric projection. If a photograph is made from a point of perspective where a square surface has the appearance of a square, scaling is made much easier. However, if the prospective point of the photographer does not so permit, trigonometric projections will be helpful to provide a corrected thermal image showing the surface area from an entirely different point of view, namely one in which the prospective point of the camera does not distort the image and thereby alter the surface area measurements or zones in the image.

While the foregoing is directed to the preferred embodiment, the scope is determined by the claims which follow.

## Claims

1. A method for surveying thermal losses from structural surfaces, comprising:

(a) forming a thermal image of a structural surface by infrared imaging of the structural surface with an infrared imaging apparatus, said image comprising a radiant energy sensitive film exposure wherein the imaged structural surface is subdivided into radiant energy zones depicting structural surface temperature variations;

(b) applying a thermal energy measuring device to selected zones of the structural surface to obtain directly measured reference heat loss samples at said selected zones; and

(c) correlating said directly measured heat loss samples from step (b) taken at said selected zones with said structural surface temperature variation in said radiant energy zones of step (a) to obtain a thermal energy loss profile of the structural surface measured in thermal energy loss per unit of time.

2. The method according to Claim 1 summing heat loss values for the selected zones of the structural surface to obtain heat loss values for the entire surface.

3. The method of Claim 1 wherein said correlating step is accomplished by scaling heat loss of said selected zones according to directly measured heat loss at selected points on said zones of the surface to thus derive overall heat loss of the structural surface.

4. The method of claim 1 wherein:

(a) step (a) includes selecting surface areas of the structural surface having substantially common exterior heat loss characteristics and producing a thermal image of said selected surface area;

(b) step (b) includes selecting a position on each of said selected surface areas for direct heat loss measurement and producing a thermal image of said selected surface areas;

(c) step (b) includes identifying each selected position on said selected surfaces of said thermal image; and

(d) step (c) includes scaling said thermal image to said direct heat loss measurement calculating overall heat loss from said selected thermal image.

5. The method of Claim 4 wherein a plurality of instrumentation sites are located within selected areas of said surface having steep temperature gradients.

6. The method of Claim 5, wherein

(a) heat measurement devices are permanently installed at selected locations on said surface; and

(b) the collecting the heat flux samples is accomplished by portable heat flux measurement devices.

7. The method of Claim 4 wherein said thermal image presents heat loss variations in the form of colors representing temperature ranges.

8. A method as recited in Claim 7 wherein scaling is accomplished by comparing the heat loss of said selected position as appearing on the thermal image and determining the various heat loss rates represented by all of the color variations as the result of said comparison.

9. The method of Claim 8 wherein said calculating step comprises summing the heat loss represented by the areas encompassed by each range of heat loss represented by said colors of said thermal image.

FIG.1

FIG.2

FIG.3

FIG.4